Europäisches Patentamt

European Patent Office

Office européen des brevets

(19)

(11) Numéro de publication : **0 204 632**
**B1**

(12) # FASCICULE DE BREVET EUROPÉEN

(45) Date de publication du fascicule du brevet :
28.03.90

(21) Numéro de dépôt : 86401174.7

(22) Date de dépôt : 03.06.86

(51) Int. Cl.⁵ : **H 04 M   9/00**

(54) **Système de communication utilisable, notamment dans un véhicule blindé.**

(30) Priorité : 04.06.85 FR 8508416

(43) Date de publication de la demande :
10.12.86 Bulletin 86/50

(45) Mention de la délivrance du brevet :
28.03.90 Bulletin 90/13

(84) Etats contractants désignés :
AT BE CH DE GB IT LI LU NL SE

(56) Documents cités :
FR–A– 2 054 898
FR–A– 2 297 523

(73) Titulaire : **ELNO S.A.**
**18-20 rue du Val Notre-Dame**
**F-95100 Argenteuil (FR)**

(72) Inventeur : **Charier, Georges**
**11 rue R. Schuman**
**F-95300 Pontoise (FR)**
Inventeur : **Abraham, Philippe**
**1 allée des Chataigniers**
**F-95120 Ermont (FR)**

(74) Mandataire : **Moncheny, Michel et al**
**c/o Cabinet Lavoix 2 Place d'Estienne d'Orves**
**F-75441 Paris Cedex 09 (FR)**

EP 0 204 632 B1

## Description

La présente invention concerne les systèmes de communication et elle se rapporte plus particulièrement à un système de communication utilisable notamment dans un véhicule blindé.

Les systèmes de communication utilisés dans de telles applications ont plusieurs fonctions.

En effet, on sait que ces systèmes doivent permettre une communication permanente en interphonie entre les différents postes du véhicule et une communication des différents postes du véhicule avec l'extérieur par l'intermédiaire de dispositifs émetteur/récepteur radio.

A cet effet, les systèmes de communication de l'état de la technique sont organisés autour d'un boitier central auquel sont connectés des moyens de communication tels que des microphones, et des casques d'écoute, disposés à chaque poste du véhicule et des dispositifs de sortie tels que les dispositifs émetteur/récepteur radio.

Le boitier central réalise d'une part l'interconnexion des différents postes du véhicule entre eux afin d'assurer la communication permanente en interphonie et d'autre part la connexion des moyens de communication avec les dispositifs de sortie afin d'assurer la communication des différents postes du véhicule avec l'extérieur.

A chaque poste du véhicule, le microphone et le casque d'écoute sont connectés à un boitier de commande relié au boitier central, et sur lequel est disposé un organe de commutation permettant de sélectionner la communication souhaitée. L'utilisateur sélectionne donc, par l'intermédiaire de l'organe de commutation, un dispositif de sortie ainsi que sa fonction.

C'est ainsi que, par exemple, les organes de commutation disposés sur les boitiers de commande à chaque poste du véhicule, doivent permettre la mise en veille radio ou en émission radio du dispositif de sortie sélectionné.

Ces boitiers de commande présentent donc des câblages internes et des liaisons avec le boitier central relativement complexes pour assurer toutes les fonctions désirées.

Dans certains cas notamment lorsque ces systèmes de commutation sont utilisés dans des engins blindés tels que des chars, toutes les communications ne sont pas autorisées. Ainsi, par exemple, tous les postes du véhicule ne peuvent pas être connectés à certains dispositifs émetteur/récepteur radio.

En effet, ces dispositifs émetteur/récepteur radio sont par exemple calés sur la fréquence du poste de commandement, la fréquence du char du chef de groupe, etc, avec lesquels seul le poste du chef de char est autorisé à communiquer.

On conçoit aisément qu'un tel dispositif présente un certain nombre d'inconvénients, notamment au niveau du câblage nécessaire pour assurer toutes les connexions. Il en résulte une réduction de la qualité de la communication et une augmentation des coûts de fabrication d'une telle installation.

Un but de l'invention est donc de proposer un système de communication dont le câblage soit le plus simple possible tout en permettant d'améliorer la qualité de la communication.

Un autre but de l'invention est de proposer un système de communication dont les boitiers de commande installés à chaque poste du véhicule, soient d'une utilisation très simple.

Un autre but de l'invention est de proposer un système de communication qui puisse être adapté facilement aux différentes configurations de communication nécessaires dans différentes applications.

Un autre but de l'invention est de proposer un système de communication qui soit fiable pour répondre à des critères communs dans de telles applications mais dont les coûts de fabrication soient relativement faibles.

A cet effet, l'invention a pour objet un système de communication utilisable notamment dans un véhicule blindé, dans lequel les différents postes du véhicule sont connectés à un boitier central comportant des moyens d'interconnexion pour une communication permanente en interphonie entre les différents postes du véhicule et des moyens de commutation sélective de certains postes du véhicule avec des dispositifs émetteur/récepteur radio connectés au boitier central de façon à permettre une communication de certains postes du véhicule avec l'extérieur, caractérisé en ce que les moyens de commutation sélective des postes du véhicule avec les dispositifs émetteur/récepteur radio comprennent en outre un dispositif de balayage séquentiel des postes du véhicule, des moyens de mémorisation, pour chaque poste, d'une séquence de connexion avec les dispositifs émetteur/récepteur radio, des moyens d'incrémentation de chacune desdites séquences de connexion en réponse à un signal de commande engendré par l'opérateur à partir de chaque poste du véhicule, et des moyens de connexion sélective desdits postes avec lesdits dispositifs émetteur/récepteur radio en fonction de la position sélectionnée desdites séquences de connexion.

L'invention sera mieux comprise à l'aide de la description qui va suivre, donnée uniquement à titre d'exemple et faite en se référant aux dessins annexés, sur lesquels :

la Fig. 1 représente un schéma synoptique d'un premier mode de réalisation d'un système de communication selon la présente invention ;

la Fig. 2 représente un schéma synoptique d'un boitier de commande entrant dans la constitution d'un système de communication selon l'invention et de son raccordement au boitier central ;

la Fig. 3 est un schéma synoptique d'un interface entrant dans la constitution d'un système de communication selon l'invention ;

la Fig. 4 représente un schéma synoptique de deux autres boitiers de commande entrant dans la constitution d'un système de communication selon l'invention ;

la Fig. 5 représente à plus grande échelle une partie du système de communication représenté sur la Fig. 1 ;

la Fig. 6 représente un schéma synoptique d'un deuxième mode de réalisation d'un système de communication selon l'invention ;

la Fig. 7 représente à plus grande échelle une partie du système de communication représenté sur la Fig. 6 ; et

la Fig. 8 représente à plus grande échelle un boitier de commande entrant dans la constitution d'un système de communication selon la Fig. 6.

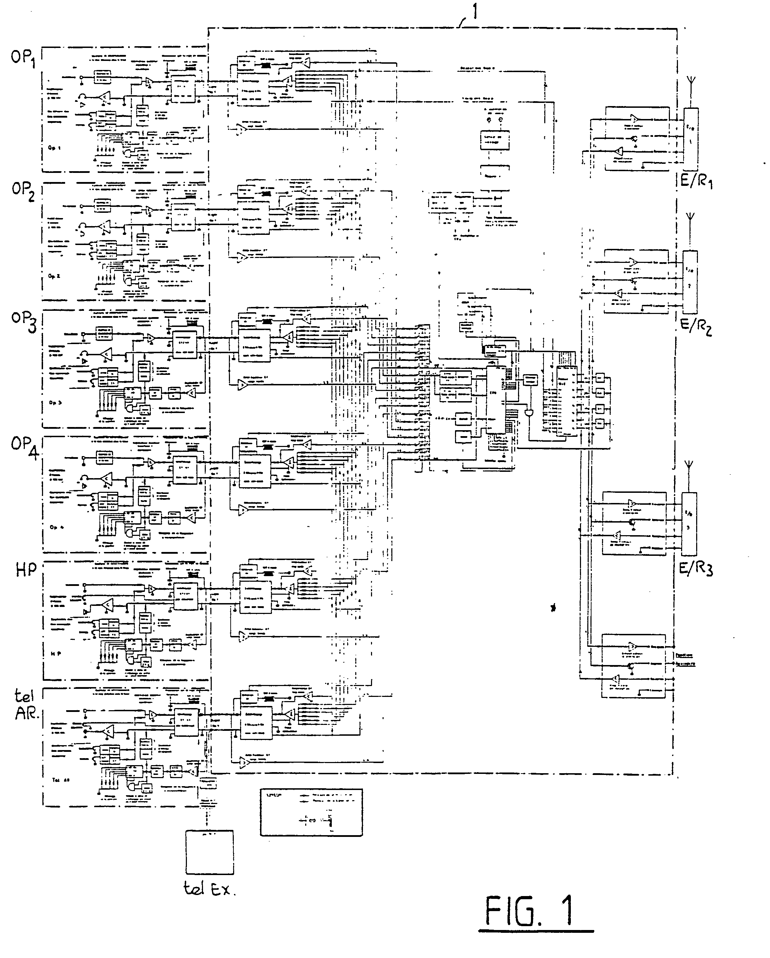

Ainsi qu'on peut le voir sur la Fig. 1 qui représente un premier mode de réalisation d'un système de communication selon l'invention, un boitier central 1 comportant différents composants qui seront décrits par la suite, est connecté à six boitiers de commande disposés à différents postes du véhicule. C'est ainsi que le boitier central est relié à quatre postes « opérateur » OP1, OP2, OP3 et OP4, à un poste « haut-parleur » HP et à un poste « téléphone arrière » TEL.AR. Une ligne de « téléphone extérieure » TEL.EX peut également être reliée au boitier 1. Ces différents postes seront dénommés ci-après « périphériques d'entrée ».

Trois dispositifs émetteur/récepteur radio E/R1, E/R2, E/R3 sont également connectés au boitier central 1. Ces dispositifs émetteur/récepteur radio seront dénommés ci-après « périphériques de sortie ». Ces dispositifs émetteur/récepteur radio sont destinés comme on le verra par la suite, à assurer une communication de certains périphériques d'entrée, avec l'extérieur. Ainsi par exemple, ces dispositifs assurent la liaison de certains périphériques d'entrée avec le char du chef de groupe, le poste de commandement, etc.

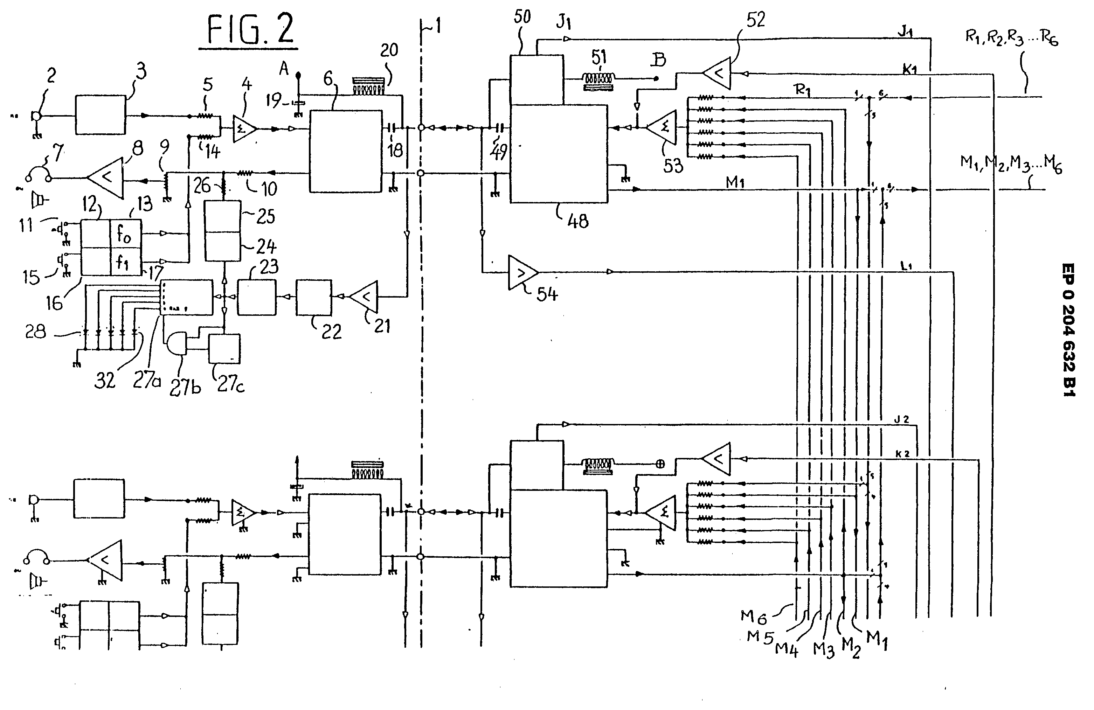

Comme le montre plus clairement la Fig. 2, chaque poste opérateur OP1, OP2, OP3, OP4 comporte un microphone 2. Une borne de ce microphone 2 est connectée à la masse et son autre borne est reliée à l'entrée d'un dispositif 3 de déclenchement à la voix de type connu. Ce dispositif 3 maintient la ligne de modulation coupée tant qu'une modulation n'est pas issue du microphone de l'opérateur concerné.

La sortie de ce dispositif 3 est reliée à l'entrée d'un amplificateur sommateur 4 par l'intermédiaire d'une résistance 5. La sortie de cet amplificateur 4 est reliée à une borne d'un interface « deux fils-quatre fils » 6 qui sera décrit plus en détail par la suite.

Chaque poste « opérateur » OP comporte également un casque d'écoute (et/ou un haut-parleur) 7 connecté à la sortie d'un amplificateur 8 dont l'entrée est reliée au point milieu d'un potentiomètre 9. Une borne de ce potentiomètre 9 est reliée à la masse tandis que son autre borne est reliée à une borne de l'interface 6 à travers une résistance 10.

On trouve également sur chaque poste « opérateur » un bouton-poussoir 11 dont une borne est connectée à la masse et dont l'autre borne est reliée à un monostable 12. La sortie de ce monostable commande un oscillateur 13 d'une première fréquence f0. La sortie de cet oscillateur 13 est reliée à travers une résistance 14 à l'entrée de l'amplificateur sommateur 4.

Chaque poste « opérateur » comporte également un second bouton poussoir 15 dont une borne est reliée à la masse et dont une autre borne est reliée à un dispositif anti-rebond 16. La sortie de ce dispositif anti-rebond 16 commande un oscillateur 17 d'une deuxième fréquence f1 dont la sortie est reliée à l'entrée de l'amplificateur sommateur 4 à travers la résistance 14.

Si l'on considère maintenant les bornes de l'interface 6 se trouvant du côté du boitier central 1, on peut constater qu'une borne de cet interface est reliée à une borne du boitier central à travers un condensateur 18, tandis qu'une deuxième borne de cet interface est reliée à une autre borne du boitier central 1 et à la masse.

Une borne A d'alimentation est reliée à la masse à travers un condensateur 19 et à la borne du condensateur 18 qui est reliée au boitier central 1, à travers une inductance à noyau 20. Cette borne du boitier central 1 est également reliée à l'entrée d'un amplificateur basse fréquence à large bande 21 dont la sortie est connectée à un filtre passe-bande 22 de détection de la première fréquence f0. La sortie de ce filtre est reliée à l'entrée d'un détecteur de seuil 23 dont la sortie est reliée à un monostable 24 connecté à un oscillateur de fréquence (1 000 Hz) 25. La sortie de cet oscillateur 25 est reliée à la borne de la résistance 10, qui est connectée au potentiomètre 9, à travers une résistance 26.

La sortie du détecteur de seuil 23 est également reliée à l'entrée d'un compteur diviseur 27a dont les sorties sont reliées à l'anode de diodes électroluminescentes 28 à 32, les cathodes de ces diodes électroluminescentes étant reliées à la masse. Ces diodes électroluminescentes 28 à 32 constituent un dispositif d'affichage dont la fonction sera définie par la suite. La sortie du détecteur de seuil 23 est également reliée à une borne d'entrée d'un monostable 27c et à une borne d'une porte 27b. La sortie du monostable 27c est également reliée à une borne de la porte 27b. La sortie de la porte 27b est reliée à une borne de remise à zéro du compteur diviseur 27a.

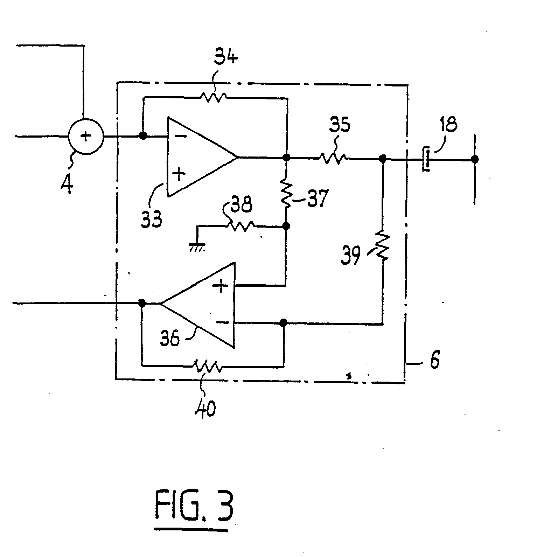

Comme on peut le voir sur la Fig. 3 qui représente l'interface « deux fils - quatre fils » 6, celui-ci reçoit à l'une de ses entrées, c'est-à-dire sur l'entrée inverseuse d'un amplificateur opérationnel 33, un signal de sortie de l'amplificateur sommateur 4, représentant la somme du signal de modulation provenant du microphone 2 et du signal provenant des oscillateurs 13 et 17 comme on l'a déjà vu.

Cette entrée inverseuse de l'amplificateur opérationnel 33 est reliée à la sortie de ce dernier à travers une résistance 34. Cette sortie est également reliée à une borne d'une résistance 35 dont l'autre borne constitue la borne de l'interface reliée au condensateur 18.

La sortie de l'amplificateur 33 est également reliée à l'entrée non inverseuse d'un amplificateur opérationnel 36 à travers une résistance 37. Cette entrée non inverseuse est également reliée à la masse à travers une résistance 38. L'entrée inverseuse de l'amplificateur opérationnel 36 est reliée à la borne de la résistance 35 constituant la borne de l'interface reliée au condensateur 18, à travers une résistance 39.

L'entrée inverseuse de l'amplificateur opérationnel 36 est également reliée à la sortie de celui-ci, à travers une résistance 40. Cette sortie constitue la borne de l'interface 6 qui est reliée à une borne de la résistance 10.

A ce dispositif « deux fils/quatre fils » peut être substitué un dispositif « trois fils/quatre fils » séparant les modulations émission et réception, ceci pour l'emploi éventuel de postes émetteurs-récepteurs à compresseurs de modulation.

En effet, ceux-ci exigent une grande protection à la diaphonie et la modulation résiduelle d'un dispositif « deux fils/quatre fils » pourrait les gêner dans leur fonctionnement (modulation interphone par exemple).

Le fonctionnement et l'architecture du dispositif n'étant modifié qu'au niveau de la séparation des lignes émission et réception sur la résistance 39 qui comporterait alors sa connexion propre.

Ainsi qu'on l'aura compris les quatre postes « opérateur » sont identiques.

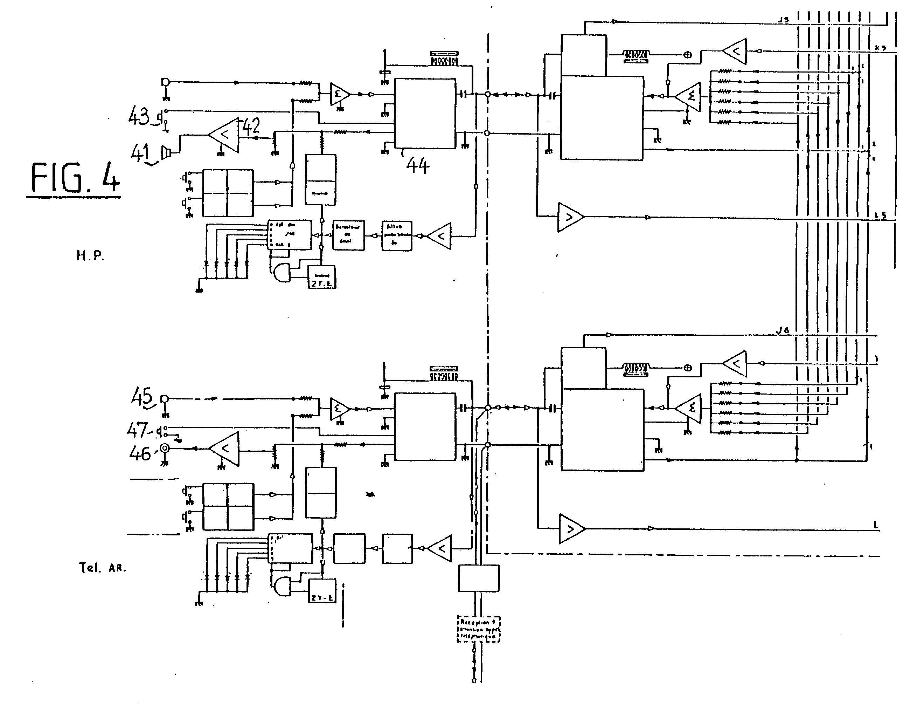

Si l'on se reporte maintenant à la Fig. 4 qui représente le schéma des postes « haut-parleur » et « téléphone arrière », on constate que le poste « haut-parleur » HP ne comporte pas de casque, mais il comporte un haut-parleur 41 relié à la sortie d'un amplificateur 42 dont l'entrée est connectée au point milieu d'un potentiomètre de la même manière que l'amplificateur de casque 8 décrit dans les postes « opérateur ». Le poste « haut-parleur » est muni d'un bouton poussoir de commande d'alternat 43 relié à une borne de l'interface 44. La partie non décrite de ce schéma est analogue à celle décrite pour les postes « opérateur ».

Le poste « téléphone arrière » TEL.AR comporte également un microphone 45, un dispositif d'écoute 46 et un bouton poussoir de commande d'alternat 47 connecté de manière analogue aux éléments correspondants déjà décrits.

Si l'on revient maintenant à la Fig. 2, on constate que chaque périphérique d'entrée est connecté par l'intermédiaire de deux fils au boitier central 1. Ceci est réalisé par l'intermédiaire de l'interface « deux fils-quatre fils » tel qu'il a été décrit en référence à la Fig. 3. Comme on peut le constater ces deux fils sont reliés à l'entrée d'un interface 48 du boitier central 1 de construction similaire à l'interface 6. Une borne de cet interface 48 est reliée à travers un condensateur 49 au condensateur 18 du poste « opérateur » OP1. Une autre borne de cet interface 48 est reliée à l'autre borne de l'interface 6 et à la masse.

Une borne du condensateur 49 est reliée à l'entrée d'un détecteur de consommation 50 dont une autre borne est reliée à une borne B d'alimentation à travers une inductance à noyau 51. Le branchement de la ligne de sortie J1 de ce détecteur de consommation sera décrit par la suite.

Une ligne K1 dont le branchement sera décrit par la suite est connectée à l'entrée d'un amplificateur basse fréquence à large bande 52. la sortie de cet amplificateur est reliée à une entrée de l'interface 48. Cette entrée de l'interface 48 est également connectée à la sortie d'un amplificateur sommateur 53.

Une ligne M1 est connectée à une borne de l'interface 48 et est reliée à l'entrée de l'amplificateur sommateur correspondant à l'amplificateur sommateur 53, des autres dispositifs de raccordement des périphériques d'entrée du système.

Les entrées de l'amplificateur sommateur 53 du poste « opérateur » OP1 reçoivent donc les lignes correspondantes M2, M3, M4 des postes « opérateur » OP2, OP3, OP4, de même que les lignes M5 et M6 provenant des postes « haut parleur » et « téléphone arrière ».

On conçoit donc que chaque amplificateur sommateur du dispositif de raccordement de chaque périphérique d'entrée reçoit les signaux de sortie M des dispositifs de raccordement des autres périphériques d'entrée.

Une entrée de l'amplificateur 53 reçoit une ligne R1 dont le branchement sera décrit par la suite.

La borne du condensateur 49 reliée à la borne d'entrée du dispositif de consommation 50 est également reliée à une borne d'entrée d'un amplificateur basse fréquence à large bande 54, le branchement de la ligne de sortie L1 de cet amplificateur sera décrit par la suite.

Il est à noter que les dispositifs de raccordement des périphériques d'entrée étant identiques, on retrouve les mêmes lignes sur les autres dispositifs de raccordement.

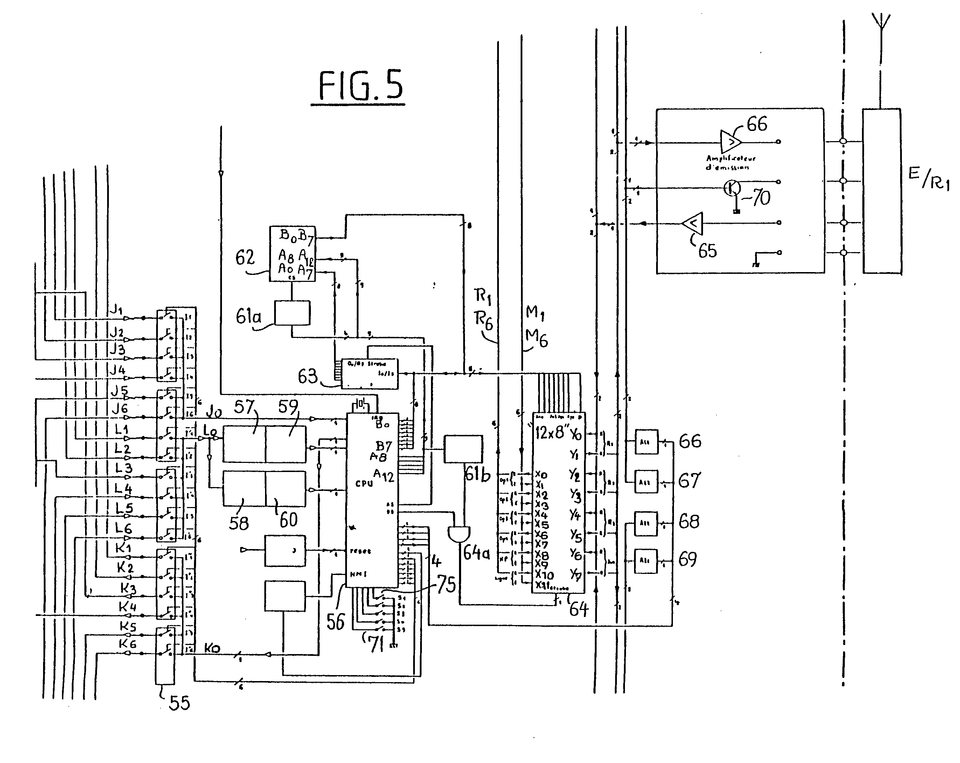

Ainsi qu'on peut le voir sur la Fig. 5, les lignes J, K et L provenant des différents dispositifs de raccordement des périphériques d'entrée, sont connectées à des bornes interrupteurs statiques 55. Les autres bornes de ces interrupteurs connectés aux lignes correspondantes de chaque dispositif de raccordement, sont reliées ensemble en J0, L0 et K0. Les lignes J0 et K0 sont reliées directement à des bornes d'une unité centrale de traitement 56 constituée par un microprocesseur qui sera dénommée ci-après « CPU ».

Comme on l'a vu, les lignes J correspondent aux bornes de sortie des détecteurs de consommation des périphériques d'entrée, tandis que les lignes K sont reliées à l'entrée des amplificateurs correspondant à l'amplificateur 52 du poste « opérateur » OP1.

La ligne L0 correspondant aux lignes L1 à L6 provenant des amplificateurs correspondant à l'amplificateur 54 du poste « opérateur » OP1 est reliée à l'entrée d'un filtre passe-bande de ladite première fréquence f0, 57 et à l'entrée d'un filtre passe-bande de deuxième fréquence f1, 58. Les sorties de ces filtres commandent des dispositifs de détection 59 et 60 respectivement. Les sorties des dispositifs de détection 59 et 60 sont reliées à des bornes d'entrée du CPU 56. Il est à noter que les bornes de commande des interrupteurs statiques 55 sont reliées au CPU par l'intermédiaire d'une ligne omnibus, de manière que les lignes J, K et L de même numéro correspondant à chaque périphérique d'entrée soient commutées simultanément et donc reliées au CPU et aux filtres 57 et 58 respectivement.

Une ligne omnibus de sortie d'adresse A8 à A12 du CPU 56 est reliée à une mémoire reprogrammable 62 et à un décodeur d'adresse 61a dont la sortie est reliée à la mémoire reprogrammable 62. Les entrées A0 à A7 de cette mémoire 62 sont connectées à la sortie d'une mémoire tampon 63. Une ligne omnibus de données B0 à B7 du CPU 56 est également relié à cette mémoire tampon 63, à une matrice de connexion « 12 × 8 » ou tout autre réseau de matrices à arrangement différent, 64 et à la mémoire 62. Une borne de cette matrice de connexion 64 est reliée à la sortie d'une porte 64a dont une entrée est reliée à une borne du CPU 56 et dont une autre entrée est reliée à un dispositif de décodage d'adresse 61b relié à la ligne omnibus d'adresse A8-A12.

Les lignes M1 à M6 et les lignes R1 à R6 dont le branchement sur le dispositif de raccordement de chaque périphérique a été décrit en référence à la Fig. 2, sont reliées à cette matrice 64. Ainsi, les lignes M1 à M6 sont connectées respectivement à des bornes X1, X3, X5, X7, X9 et X11 de la matrice, tandis que les lignes R1 à R6 sont reliées à des bornes X0, X2, X4, X6, X8 et X10 de la matrice 64. On peut donc constater que les bornes X0-X1, X2-X3, X4-X5, X6-X7, X8-X9, X10-X11, sont affectées respectivement aux postes OP1, OP2, OP3, OP4, HP, TEL.AR.

Des bornes Y0, Y2, Y4, Y6 de la matrice de connexion 64 sont reliées à la sortie d'amplificateurs de réception (dont un seul, 65, est représenté sur la Fig. 5). L'entrée de cet amplificateur est connectée de manière connue au dispositif émetteur/récepteur radio E/R1 constituant un périphérique de sortie du système.

Les sorties Y1, Y3, Y5, Y7 de la matrice sont reliées à l'entrée d'amplificateurs d'émission (dont un seul, 66, est représenté). La sortie de cet amplificateur est reliée de manière connue au dispositif émetteur/récepteur radio E/R1.

Quatre bornes du CPU 56 sont reliées à l'entrée de dispositifs de commande d'alternat 66 à 69. La sortie de chaque dispositif de commande d'alternat est reliée à la base d'un transistor NPN 70 dont l'émetteur est à la masse et dont le collecteur est relié au dispositif émetteur/récepteur radio de façon à commander la mise en alternat dudit dispositif émetteur/récepteur concerné.

Cinq bornes du CPU 56 sont connectées à des bornes d'interrupteurs 71 à 75 dont les bornes de sortie sont reliées à la masse. Ces interrupteurs 71 à 75 constituent des dispositifs de sélection et de fixation de priorité comme nous le verrons par la suite.

L'alimentation du dispositif est assurée par le réseau de bord du véhicule, à partir de dispositifs de filtrage et de régulation pour les circuits électroniques, sauf pour le CPU et ses mémoires associées qui sont alimentés à travers un régulateur de charge comprenant des accumulateurs, de façon à sauvegarder le contenu des mémoires et à maintenir le CPU à l'état de veille, lorsque l'alimentation est coupée.

Le fonctionnement d'un tel dispositif est le suivant.

A la suite de la mise sous tension du dispositif, le CPU 56 initialise ses registres ainsi que ses ports d'entrée-sortie, la matrice de connexion 64 et la mémoire tampon 63.

Le CPU commute alors les interrupteurs statiques 55 associés au poste « opérateur » OP1, c'est-à-dire les interrupteurs correspondant aux lignes J1, K1 et L1, ce qui lui permet de s'assurer par un test de la ligne J1 de la connexion du périphérique OP1 par l'intermédiaire du détecteur de consommation 50 qui est déclenché lorsque le périphérique OP1 est connecté.

Le CPU cherche ensuite dans sa mémoire le dernier état de sélection du périphérique concerné et effectue les connexions correspondantes par l'intermédiaire de la matrice de connexion 64. Par défaut, il établit les connexions d'initialisation codées par les interrupteurs 71 à 75.

Le CPU envoie alors au périphérique d'entrée concerné, c'est-à-dire au poste « opérateur » OP1 dans ce cas, un ordre de remise à zéro de l'affichage de celui-ci, cet affichage est réalisé par les diodes 28 à 32. Ceci est concrétisé par l'émission sur la ligne K1 d'une fréquence f0 pendant un temps égal à 2 T.

Ce signal est transmis au poste « opérateur » concerné par l'intermédiaire de l'amplificateur 52 et de l'interface 48. Ce signal de fréquence f0 est détecté par l'amplificateur 21, le filtre 22 et le détecteur de seuil 23 du poste « opérateur » OP1. La durée de ce signal est comparée à celle du monostable 27c de remise à zéro, la durée de ce monostable étant égale à $\underline{2\,T - \varepsilon}$. En fonction du résultat de la comparaison, un signal de remise à zéro est appliqué au compteur diviseur 27a de façon à effectuer sa remise à zéro.

Le CPU 56 envoie alors un train d'impulsions modulées de fréquence f0 et de durée T. Le nombre d'impulsions correspond à la sélection effectuée précédemment sur le périphérique considéré, et qui est contenue dans la mémoire du CPU. Le monostable 27c de remise à zéro n'est donc pas activé et l'affichage correspond alors à la sélection d'initialisation du périphérique concerné. Le CPU passe ensuite aux périphériques suivants, c'est-à-dire aux postes OP2, OP3, OP4, HP et TEL.AR en testant les lignes J et L par les interrupteurs 55 correspondants de chaque périphérique et en recommençant son cycle d'établissement des connexions et d'affichage de la position d'initialisation de chaque périphérique. Tous les périphériques sont ainsi initialisés. Le système est alors initialisé dans la dernière configuration connue, c'est-à-dire celle qui avait été sélectionnée par l'utilisateur avant l'arrêt du système ou, par défaut, dans la configuration sélectionnée et établie par les interrupteurs 71 à 75.

Le CPU commence alors une opération de balayage et de structation successive des différents périphériques d'entrée en commutant les interrupteurs 55 correspondant à chaque périphérique d'entrée et en testant les lignes L par lesquelles transitent les demandes de modification du réseau ainsi établi.

En cas de demande d'incrémentation provenant d'un des périphériques, par exemple du poste opérateur OP1, à la suite de l'action de l'opérateur sur le bouton poussoir d'incrémentation 11, le monostable 12 lié à ce bouton poussoir 11 se déclenche, commandant ainsi l'oscillateur 13 d'une première fréquence f0 qui lui est associé. La durée de ce monostable étant calibrée, le CPU lors de son opération de balayage va détecter cette fréquence f0 transitant par la ligne L1 du poste « opérateur » OP1, car lorsque le CPU ferme les interrupteurs 55 associés à ce périphérique OP1, le filtre 57 et le détecteur de seuil 59, dont la fonction est d'éviter la prise en compte de parasites éventuels, détectent la fréquence f0 émise. La sortie du détecteur de seuil 59 passe alors à l'état actif de façon à indiquer au CPU, la présence de la fréquence f0 sur la ligne L1, ce qui indique qu'un opérateur a agit sur le bouton poussoir d'incrémentation et désire une modification du réseau de connexion.

Le CPU débute alors un cycle d'incrémentation de sélection. Il va chercher dans sa mémoire la dernière sélection de l'opérateur sur la ligne duquel a été détectée la fréquence f0, il annule cette sélection, il retourne en mémoire chercher la sélection suivante et commande la matrice de connexion de façon à obtenir les nouvelles connexions s'y rapportant. Il va de soi que les séquences de connexion c'est-à-dire les connexions qui seront établies à chaque demande d'incrémentation provenant d'un périphérique d'entrée, ont été introduites au préalable dans la mémoire 62 associée au CPU.

Le CPU 56 émet alors sur la ligne K du périphérique concerné, c'est-à-dire dans le cas du poste OP1, la ligne K1, un signal de fréquence f0 pendant un temps T. Ceci se traduit par une incrémentation de l'affichage de sélection sur le poste « opérateur » OP1, mais également par la génération d'un signal sonore, par exemple à une fréquence de 1 000 Hz dans le casque d'écoute ou le haut-parleur du périphérique par l'intermédiaire de l'oscillateur 25.

Lorsque ces opérations sont terminées, le CPU poursuit la structation des lignes J et L des autres périphériques.

Dans le cas d'une demande de mise en alternat d'un dispositif émetteur/récepteur radio, l'action de l'utilisateur sur le bouton poussoir de mise en alternat 15 du périphérique OP1, a pour effet de déclencher l'oscillateur 17 relié à ce bouton poussoir par le dispositif anti-rebond 16.

Un signal de fréquence f1 est alors transmis vers le boitier central de la même façon que le signal de fréquence f0 décrit précédemment.

Le filtre 58 et le détecteur 60 associés au CPU 56 vont donc détecter la présence de cette fréquence f1 sur la ligne L1 du dispositif de raccordement du poste « opérateur » OP1.

Le CPU entraîne alors un cycle de mise en alternat du dispositif émetteur/récepteur radio qui a été précédemment sélectionné par l'utilisateur à l'aide du bouton poussoir d'incrémentation. Le CPU va chercher dans sa mémoire la dernière sélection du périphérique concerné sur lequel il a détecté la présence de la fréquence f1, il vérifie que cette sélection correspond bien à la sélection de mise en alternance d'un dispositif émetteur/récepteur radio, c'est-à-dire sa mise en émission, il détermine ensuite quel dispositif émetteur/récepteur doit être connecté et vérifie qu'une interdiction n'a pas été programmée sur les interrupteurs 71 à 75. En effet, il a déjà été mentionné que certains périphériques d'entrée peuvent ne pas être autorisés à communiquer par l'intermédiaire de certains dispositifs émetteur/récepteur radio.

Le CPU commande alors la matrice de connexion pour assurer la liaison avec le poste opérateur concerné et envoie le code adéquat sur le dispositif de mise en alternat 66 à 69 concerné, pour la mise en émission du dispositif émetteur/récepteur. Une fois cette opération achevée, le CPU poursuit sa structation des différents postes par l'intermédiaire des interrupteurs 55. L'alternat reste actif tant que le CPU détecte la présence de la fréquence f1 sur la ligne correspondante à chaque structation.

A la disparition du signal de fréquence f1, c'est-à-dire lorsque l'utilisateur relache le bouton poussoir 15, le CPU fait passer l'alternat à l'état inactif et déconnecte la ligne d'émission du dispositif émetteur/récepteur radio concerné.

On conçoit donc que la mémoire du CPU comporte les séquences programmées de connexion des périphériques d'entrée permettant de commander la configuration de la matrice de connexion, par incrémentation de ces séquences à partir du bouton poussoir d'incrémentation 11.

Les interrupteurs statiques 55 constituent donc des moyens de balayage séquentiel des différents postes du véhicule. L'incrémentation des séquences programmées dans la mémoire 62 est, quant à elle, assurée par le microprocesseur et la matrice de connexion constitue des moyens de connexion sélective des postes du véhicule avec les dispositifs émetteur/récepteur radio.

On peut constater à la lecture de cette partie de la description, une simplification d'emploi du système de communication et un gain de place appréciable au niveau du poste opérateur. En effet, l'organe de commutation classique est remplacé par un bouton poussoir associé à un oscillateur dont la sortie est superposée à la modulation issue du microphone, de sorte que la transmission des informations de commande se fait par l'intermédiaire du circuit de modulation du poste opérateur.

Suivant un autre mode de réalisation du système de communication selon la présente invention, le système comporte un synthétiseur de parole.

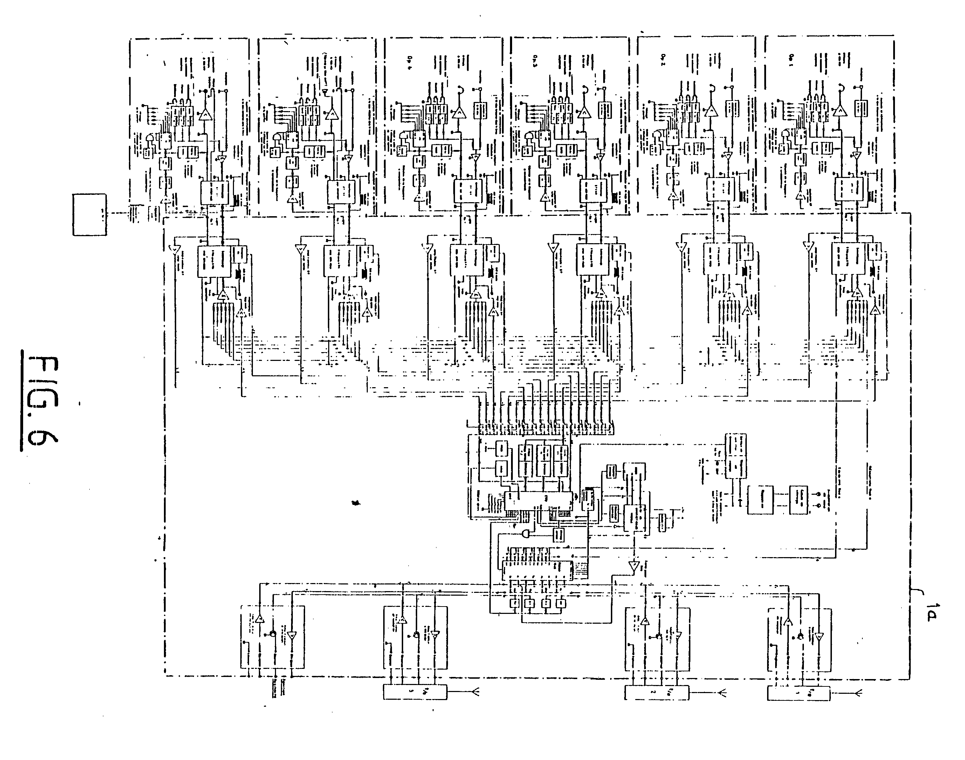

La Fig. 6 représente un schéma synoptique d'un système de communication selon l'invention comportant un synthétiseur de parole. Ainsi qu'on peut le voir sur cette Figure, le système de communication comporte un boitier central 1a auquel sont connectés des périphériques d'entrée dont la structure sera définie ci-après et des périphériques de sortie constitués par des dispositifs émetteur/récepteur radio comme dans le mode de réalisation précédent.

Pour des raisons de clarté, les parties de circuit identiques au mode de réalisation précédent ne seront pas décrites.

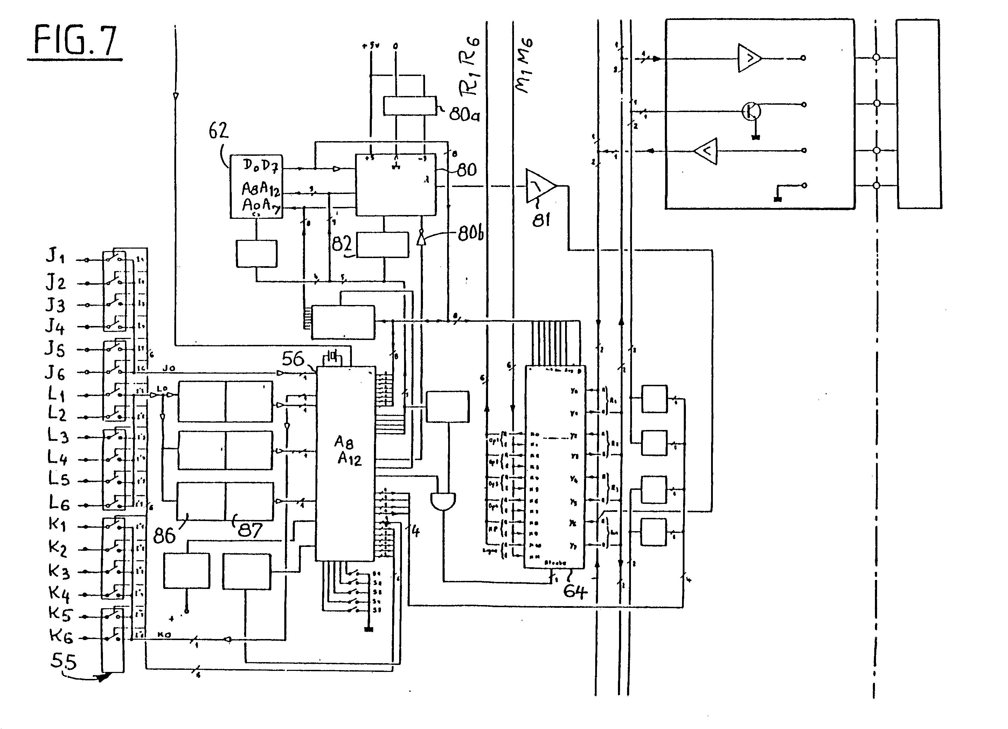

Ainsi qu'on peut le voir sur la Fig. 7, un synthétiseur de parole 80 est connecté au CPU 56. Une sortie de ce synthétiseur de parole 80 est reliée par l'intermédiaire d'un filtre passe-bas 81 aux bornes Y0, Y2, Y4 et Y6 de la matrice de connexion 64 reliées aux lignes de réception des dispositifs émetteur/récepteur radio.

Ce synthétiseur de parole 80 est adressé par le CPU 56 à travers un décodeur d'adresse 82 connecté aux bornes A8 à A12 du CPU. L'alimentation en + 5 V et − 5 V du synthétiseur 80 est assurée par un convertisseur 80a. Le synthétiseur de parole 80 est également relié aux bornes D0 à D7, A0 à A7 et A8 à A12 de la mémoire 62. Une borne du synthétiseur est reliée à une borne du CPU 56 à travers un inverseur 80b.

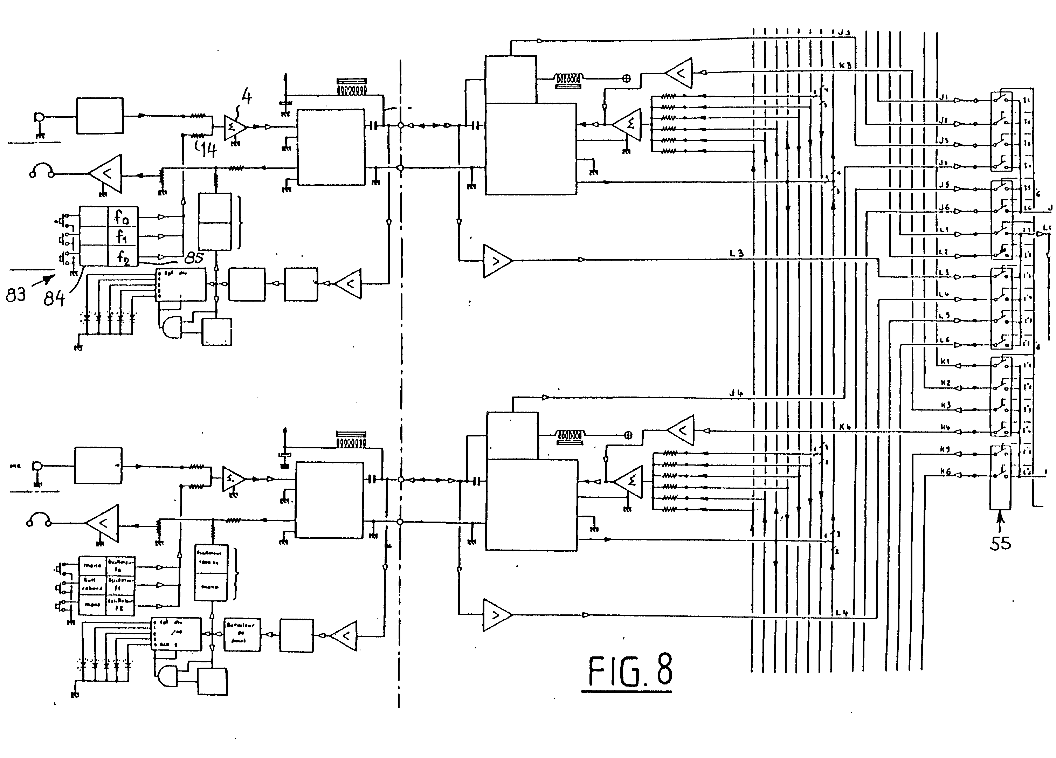

Comme on peut le voir sur la Fig. 8, chaque périphérique d'entrée comporte les mêmes éléments que dans le mode de réalisation précédent. Cependant, il est prévu un bouton poussoir d'identification 83 dont une borne est reliée à la masse et dont une autre borne est reliée à un monostable 84 commandant un oscillateur d'une troisième fréquence f2, 85 dont la sortie est reliée à l'amplificateur sommateur 4 à travers la résistance 14. Les autres périphériques d'entrée comportent également un circuit analogue monté en parallèle sur les boutons poussoirs 11 et 15.

Le synthétiseur de parole 80 est destiné à envoyer au périphérique concerné, un message synthétisé correspondant à chaque action que l'opérateur a effectuée. Le synthétiseur de parole comprend donc en mémoire les messages synthétisés correspondants aux diverses commandes possibles de l'opérateur. Ainsi, lorsque le CPU 56 commande la (ou les) matrice(s) de connexion de façon à modifier les connexions existantes, il commande également le synthétiseur de parole pour qu'il envoie un message synthétisé correspondant par l'intermédiaire de la ligne R de réception radio du poste concerné car comme on l'a vu le synthétiseur de parole est relié aux bornes Y0, Y2, Y4, Y6 de la (ou les) matrice(s) de connexion, ces bornes correspondant à la ligne de réception radio. Les lignes de réception radio étant connectées à chacun des périphériques d'entrée, l'émission du message par le synthétiseur se fait donc sélectivement sur chaque périphérique concerné.

Lorsque l'utilisateur appuie sur le bouton poussoir 83 « d'identification », le monostable 84 se déclenche commandant ainsi l'oscillateur 85 de fréquence f2 qui transmet cette fréquence sur la ligne L1 du périphérique concerné. Le CPU, de la même façon qu'il a détecté les fréquences f0 et f1, va alors détecter la fréquence f2 par l'intermédiaire d'un filtre passe-bande 86 et d'un dispositif de détection 87 connecté à la sortie de ce filtre, comme on peut le voir sur la Fig. 7. L'entrée du filtre 86 est connectée en parallèle sur les filtres de fréquence f0 et de fréquence f1, tandis que la sortie du détecteur 87 est reliée à une borne du CPU 56.

Lorsqu'un signal de fréquence f2 est détecté par le CPU, celui-ci entraîne alors une opération « d'identification ».

Il va chercher dans sa mémoire la dernière sélection du périphérique sur lequel il a arrêté sa scrutation. Dans le cas d'une synthèse de parole avec visualisation, c'est-à-dire lorsque les périphériques d'entrée comportent, comme dans le premier mode de réalisation, un dispositif d'affichage constitué par des diodes électroluminescentes, le CPU délivre sur la ligne K1, un signal de fréquence f0 et de durée 2 T, ce qui a pour effet de déclencher une remise à zéro de l'affichage du périphérique concerné de la même façon que durant la phase d'initialisation.

Le CPU engendre ensuite un train d'impulsions modulées à une fréquence f0 sur la ligne du périphérique et amène l'affichage de ce dernier à la position correspondant à sa dernière sélection. Il est à noter que cette phase d'affichage de la sélection est identique à celle décrite pour le mode de réalisation précédent. Dans le cas, où seule la synthèse de parole est utilisée, c'est-à-dire lorsque les périphériques ne comportent pas de dispositifs d'affichage, l'étape qui vient d'être décrite, n'existe pas.

Le CPU commande ensuite le synthétiseur de parole 80 pour qu'il envoie sur la ligne de réception radio du périphérique concerné le message correspondant à la position sélectionnée. Il est rappelé que le synthétiseur de parole est programmé au préalable et comporte les messages synthétisés correspondant aux sélections possibles.

Il est à remarquer que dans le cas de l'utilisation d'un synthétiseur de parole, l'affichage sur le périphérique assure une redondance des informations et peut à l'occasion être supprimé.

Les périphériques « haut-parleur » HP et « téléphone arrière » TEL.AR, comportent également le bouton poussoir d'identification, le monostable et l'oscillateur de fréquence f2 de manière analogue aux postes « opérateur ».

La communication en interphonie, c'est-à-dire entre chaque périphérique d'entrée est effective dès la mise sous tension du système. Les échanges ne sont pas perturbés par l'émission ou la réception des fréquences de commande de sélection f0, f1 et f2, car celles-ci sont choisies en dehors du spectre audible.

Il est à noter que dans les deux modes de réalisation décrits, l'émission en interphonie peut s'effectuer à travers un dispositif de déclenchement — la voix 3 prévu dans le circuit du microphone, ce qui a pour effet de couper le circuit microphonique en l'absence de modulation. Ceci évite de transmettre dans le circuit interphonie le bruit capté par le microphone de chaque poste entre deux phases de modulation. Il en résulte une meilleure intelligibilité de la communication.

Le système tel qu'il a été décrit permet par exemple, d'obtenir quatre sélections différentes :

interphonie-émission par système de dé-clenchement automatique avec mise en écoute sur les dispositifs émetteur/récepteur radio E/R1 et E/R2, et émission radio sur E/R1 ;

interphonie-émission par système de déclenchement automatique avec écoute et émission sur E/R1 ;

interphonie-émission par système de déclenchement automatique avec écoute et émission sur E/R2 ;

interphonie-émission par système de déclenchement automatique avec écoute et émission sur E/R3.

Il est à noter que la structure du dispositif tel qu'il a été décrit permet une communication en interphonie qu'elle que soit la sélection affichée par l'utilisateur, grâce aux moyens d'interconnexion que constituent entre autres, les lignes M.

Ainsi, l'interphonie est obtenue sans action de l'utilisateur par une transmission en « Full DUPLEX » sur les lignes.

Il est à noter qu'il est possible d'ajouter une position supplémentaire permettant de faire une sélection d'interphonie séparée.

L'incrémentation de la sélection radio est obtenue par une action de l'utilisateur sur le bouton poussoir d'incrémentation, ce qui se traduit par une transmission, sur la ligne périphérique dans le sens périphérique d'entrée vers unité centrale, d'un signal comportant une porteuse superposée à la modulation. Le boitier central reçoit donc l'ordre d'incrémentation de sélection, annule sur la matrice la sélection précédente du périphérique concerné, effectue la nouvelle connexion et envoie vers le périphérique d'entrée un signal d'acquisition.

Cette acquisition peut être effectuée de deux manières différentes :

acquisition par visualisation qui ne nécessite aucune action et qui se traduit par une transmission sur la ligne périphérique, dans le sens unité centrale vers périphérique par porteuse superposée à la modulation d'un signal d'incrémentation de son affichage et de génération d'un signal audible dans le dispositif d'écoute de l'opérateur ;

acquisition par synthèse vocale qui ne nécessite aucune action et qui se traduit par une transmission sur la ligne périphérique dans le sens unité centrale vers périphérique, d'un message synthétisé. L'unité centrale après avoir effectué la modification de connexion demandée par l'utilisateur, commande le synthétiseur de parole qui émet sur la ligne du périphérique concerné, la modulation du message synthétisé correspondant à l'opération demandée.

Une émission radio est obtenue après sélection adéquate d'un dispositif émetteur/récepteur radio, par une action sur le bouton poussoir de mise en alternat radio, qui se traduit par une transmission sur la ligne périphérique vers l'unité centrale, d'un signal comportant une porteuse superposée à la modulation. L'unité centrale reçoit alors l'ordre de mise en émission du poste radio correspondant à la sélection du périphérique, elle commande la connexion de la ligne émission concernée et ferme l'alternat d'émission du poste radio après avoir testé une éventuelle présence d'interdiction à l'émission (priorité).

La fonction d'identification est, quant à elle, obtenue par une action sur le bouton poussoir d'identification qui se traduit par une transmission sur la ligne périphérique dans le sens unité centrale vers périphérique d'un message synthétisé correspondant. L'unité centrale reçoit l'information de demande d'identification, recherche la dernière sélection du périphérique concerné et commande le synthétiseur de parole qui émet sur la ligne de ce périphérique, la modulation du message synthétisé correspondant à sa dernière sélection.

Le système tel que décrit est également muni de dispositifs de protection permettant d'assurer la sauvegarde des informations en cas de coupure de l'alimentation.

Ainsi par exemple, l'initialisation après une coupure brève de l'alimentation, ne nécessite aucune action et se traduit par une transmission sur la ligne périphérique dans le sens unité centrale vers périphérique d'un signal comportant une porteuse superposée à la modulation. Lors de son initialisation, l'unité centrale recherche la dernière sélection du périphérique sauvegardée en mémoire, exécute la connexion s'y rapportant et envoie sur la ligne de ce périphérique, un signal d'initialisation amenant son affichage à la position correspondante.

Dans le cas du système comportant un synthétiseur de parole, la séquence qui vient d'être décrite se produit et une émission de la modulation du message synthétisé correspondant, est également effectuée.

Dans le cas d'une initialisation après une coupure longue de l'alimentation qui ne nécessite aucune action, il se produit une transmission sur la ligne périphérique dans le sens unité centrale vers périphérique d'un signal comportant une porteuse superposée à la modulation. Lors de cette initialisation, l'unité centrale recherche la sélection préprogrammée du périphérique, exécute la connexion s'y rapportant et envoie sur la ligne de ce périphérique, un signal d'initialisation amenant son affichage à la position correspondante.

Dans le cas d'un système comportant un synthétiseur de parole, une émission de la modulation du message synthétisé correspondant, est également effectuée.

Lors du rebranchement d'un périphérique, la consommation de celui-ci est détectée par le détecteur de consommation correspondant.

L'unité centrale détecte alors la transition d'état de la ligne de consommation du périphérique concerné, initialise sa connexion à la dernière configuration connue et envoie sur la ligne de celui-ci une information d'initialisation correspondant à la configuration. Dans le cas d'un système avec synthèse vocale, il se produit en plus une émission de la modulation d'un message synthétisé correspondant.

Comme on l'a vu, l'alimentation du système est assurée par le réseau de bord du véhicule, la tension continue est donc filtrée par une cellule « SCHAFFNER du type 332 », puis par une régulation « série » à l'aide de circuits de régulation du type « 805 R » pour la partie logique et « 815 R » pour la partie analogique. Une régulation de charge est associée à cette fonction. C'est ainsi qu'une batterie tampon cadmium/nickel alimente l'unité centrale, ce qui permet de sauvegarder en autre le dernier état des sélections. Cette régulation est assurée par un réseau d'amplificateurs opérationnels. L'alimentation des fonctions périphériques s'effectue par les deux fils de la ligne. La liaison se fait à travers une inductance à noyau pour ne pas perturber l'impédance dynamique de la ligne. Le système de détection de consommation est réalisé en composants discrets et comme on l'a vu indique à l'unité centrale, la présence du périphérique. Dans le cas d'une utilisation d'un synthétiseur de parole, l'emploi d'un circuit intégré convertisseur de tension est nécessaire pour engendrer le − 5 volts du synthétiseur.

La sélection des commutations est organisée autour d'une unité centrale du type « 6805 E2 » à laquelle est associé un circuit de mémoire REPROM du type « 2716 ». Des circuits logiques de décodage d'adresse leur sont associés ainsi qu'une mémoire tampon 8 bits du type « 54 C 373 ».

Les commutations sont assurées par une matrice de connexion « 8 × 12 » du type « MO 93 SGS » ou tout autre arrangement de matrices de dimensions différentes, à laquelle est associée une logique de décodage d'adresse. Le balayage des périphériques est assuré par des interrupteurs statiques du type « CD 40 66 » commandés cycliquement par l'unité centrale. Ces interrupteurs transmettent les différents signaux de sélection, de mise en alternant radio et d'identification à travers des filtres et des détecteurs, réalisés à partir d'amplificateurs opérationnels. Ils transmettent également les signaux d'acquisition engendrés par l'unité centrale vers les périphériques, assurant ainsi l'affichage sur ces derniers.

L'interfaçage vers les périphériques d'entrée est réalisé par des montages deux fils/quatre fils constitués d'amplificateurs opérationnels, comme il a déjà été décrit. Comme il a déjà été mentionné, à ce dispositif « deux fils/quatre fils » peut être substitué un dispositif « trois fils/quatre fils » séparant les modulations émission et réception, ceci pour l'emploi éventuel de postes émetteurs-récepteurs à compresseurs de modulation. Des amplificateurs opérationnels assurent l'interfaçage d'émission et de réception des dispositifs émetteur/récepteur radio. La commande d'alternat radio est du type « collecteur ouvert ». Comme on l'a déjà vu, une série d'interrupteurs 71 à 75 connectés à un port de l'unité centrale permet une éventuelle présélection des priorités à l'émission radio ou de fonctions particulières lors de l'initialisation.

Dans le cas du système comportant un synthétiseur de parole, la synthèse de parole peut être réalisée à partir d'un circuit intégré synthétiseur vocal, par exemple « TMS 5220 C ». Dans ce cas, le circuit de mémoire REPROM peut être du type « 2732 ».

L'amplificateur d'écoute peut être réalisé autour d'un circuit « SL 63 10 PLESSEY » et délivre une écoute sur 600 Ohms d'une puissance moyenne de 100 milliwatts, à l'opérateur.

Les oscillateurs d'incrémentation de la sélection et de mise en alternat radio ainsi que l'oscillateur d'identification dans le cas de la synthèse de parole sont réalisés autour de portes « 54 HC 00 » couplées à des monostables « 54 HC 221 ».

La réception de la fréquence HF d'acquisition est assurée par un filtre relié à un détecteur de seuil constitué par des amplificateurs opérationnels. L'affichage de la sélection est visualisé par des diodes électroluminescentes commandées par un compteur diviseur du type « CD 4017 ».

Un oscillateur commandé par l'incrémentation de l'affichage assure à l'opérateur la prise en compte de sa commande. Cet oscillateur est également réalisé à partir de portes « 54 HC 00 » et d'un monostable « 54 HC 221 ». Le dispositif de remise à zéro et de l'affichage est réalisé à partir d'un monostable « 54 HC 221 ».

Le périphérique d'entrée « Haut Parleur » HP comporte un amplificateur d'écoute réalisé autour d'un circuit « SL 6310 » de « PLESSEY » et délivre une écoute sur un haut parleur de 8 Ohms d'une puissance moyenne de 100 milliwatts (qui peut être portée à 500 milliwatts par une alimentation extérieure). Une prise pour microphone à main peut également être prévue et ce circuit fonctionne alors en alternat.

Le périphérique d'entrée « téléphone arrière » est identique aux périphériques « opérateur ». Cependant, son microphone fonctionne toujours en alternat et il a été prévu une adaptation de ligne pour pouvoir raccorder, via une ligne extérieure, un téléphone de campagne ou encore déporter une fonction opérateur. La fonction téléphone de campagne peut également être réalisée à travers la prise auxiliaire, mais elle doit alors être traitée comme une fonction radio, c'est-à-dire par sélection ou en alternat.

Le dispositif de communication tel que décrit permet donc d'obtenir une sélection d'écoute et d'émission sur les dispositifs émetteur/récepteur radio propres à chaque périphérique d'entrée et indépendantes les unes des autres.

**Revendications**

1. Système de communication utilisable notamment dans un véhicule blindé, dans lequel les différents postes du véhicule (OP1, OP2, OP3, OP4, HP, TEL.AR) sont connectés à un boitier central (1 ; 1a) comportant des moyens d'interconnexion pour une communication permanente en interphonie entre les différents postes du véhicule et des moyens de commutation sélective de certains postes du véhicule avec des dispositifs émetteur/récepteur radio (E/R1, E/R2, E/R3) connectés au boitier central, de façon à permettre une communication de certains postes du véhicule avec l'extérieur, caractérisé en ce que les moyens de commutation sélective des postes du véhicule avec les dispositifs émetteur/récepteur radio comprennent en outre un dispositif de balayage séquentiel (55) des postes du véhicule, des moyens de mémorisation (62), pour chaque poste, d'une séquence de connexion avec les dispositifs émetteur/récepteur radio, des moyens d'incrémentation (56) de chacune desdites séquences de connexion en réponse à un signal de commande engendré par l'opérateur à partir de chaque poste du véhicule, et des moyens de connexion sélective (64) desdits postes avec lesdits dispositifs émetteur/récepteur radio en fonction de la position sélectionnée desdites séquences de connexion.

2. Système de communication selon la revendication 1, dans lequel chaque poste comporte des moyens de communication (2, 7), caractérisé en ce qu'il comporte en outre un boitier de commande sur lequel est disposé un organe de commande d'incrémentation (11) connecté à un oscillateur (13) d'une première fréquence (f0) dont la sortie est reliée à une ligne de modulation reliant les moyens de communication (2) au boitier central (1 ; 1a).

3. Système de communication selon la revendication 1 ou 2, caractérisé en ce que le dispositif de balayage séquentiel de chaque poste du véhicule est constitué par des interrupteurs statiques (55) dont une borne est reliée à ladite ligne de modulation correspondante issue des moyens de communication (2) dudit poste du véhicule, et en ce que la borne de commande desdits interrupteurs statiques (55) est reliée auxdits moyens d'incrémentation (56).

4. Système de communication selon la revendication 3, caractérisé en ce qu'une borne d'entrée des moyens d'incrémentation (56) est reliée à une sortie commune (L0) desdits interrupteurs statiques (55) à travers un filtre de détection (57) de ladite première fréquence (f0) émise à partir de chaque poste du véhicule.

5. Système de communication selon l'une quelconque des revendications précédentes, caractérisé en ce que les moyens de mémorisation desdites séquences de connexion sont constituées par une mémoire reprogrammable (62) reliée auxdits moyens d'incrémentation (56).

6. Système de communication selon l'une quelconque des revendications précédentes, caractérisé en ce que les moyens de connexion sélective sont constitués par une matrice de connexion (64).

7. Système de communication selon la revendication 6, caractérisé en ce que ladite matrice de connexion (64) est connectée par l'intermédiaire d'une ligne omnibus de données aux moyens d'incrémentation (56) et en ce qu'elle est reliée d'une part à la ligne de modulation de chaque poste du véhicule, et d'autre part, aux lignes d'émission et de réception des dispositifs émetteur/récepteur radio (E/R1, E/R2, E/R3).

8. Système de communication selon l'une quelconque des revendications 2 à 7, caractérisé en ce que le boitier de commande disposé à chaque poste du véhicule comporte également un organe de commande (15) de mise en alternat des dispositifs émetteur/récepteur radio, relié à un oscillateur (17) d'une deuxième fréquence (f1) dont la sortie est reliée à la ligne de modulation correspondante issue des moyens de communication (2).

9. Système de communication selon les revendications 4 et 8, caractérisé en ce qu'une borne d'entrée des moyens d'incrémentation (56) est reliée à ladite sortie commune (L0) desdits interrupteurs statiques (55) à travers un filtre de détection (58) de ladite deuxième fréquence (f1) émise à partir de chaque poste du véhicule.

10. Système de communication selon la revendication 9, caractérisé en ce que des bornes de sortie des moyens d'incrémentation (56) sont connectés à des dispositifs (66 à 69) de mise en alternat des dispositifs émetteur/récepteur radio de façon à commander lesdits dispositifs de mise en alternat en réponse à la détection de ladite deuxième fréquence (f1).

11. Système de communication selon l'une quelconque des revendications 2 à 10, caractérisé en ce que le boitier disposé à chaque poste du véhicule comporte également un organe de commande d'identification (83) connecté à un oscillateur (85) d'une troisième fréquence (f2) dont la sortie est reliée à la ligne de modulation reliant les moyens de communication (2) dudit poste au boitier central (1a).

12. Système de communication selon les revendications 4 et 11, caractérisé en ce qu'une borne d'entrée des moyens d'incrémentation (56) est reliée à la sortie commune (L0) desdits interrupteurs statiques (55) à travers un filtre (86) de détection de ladite troisième fréquence (f2) émise à partir de chaque poste du véhicule.

13. Système de communication selon la revendication 12, caractérisé en ce qu'une borne de sortie des moyens d'incrémentation (56) est reliée à la ligne de modulation de chaque poste du véhicule à travers un interrupteur statique (55) commandé par les moyens d'incrémentation (56) de façon à engendrer dans ladite ligne de modulation, un train d'impulsions pour signaler au poste la position dans laquelle se trouve la séquence de connexion dudit poste.

14. Système de communication selon l'une quelconque des revendications précédentes, caractérisé en ce qu'il comporte en outre un synthétiseur de parole (80) comprenant en mémoire des messages synthétisés correspondant aux diverses actions des opérateurs, en ce que le synthétiseur de parole est connecté aux moyens d'incrémentation (56) et aux moyens (62) de mémorisation des séquences par l'intermédiaire d'une ligne omnibus et en ce que la sortie du synthétiseur (80), est reliée à la ligne de réception des dispositifs émetteur/récepteur radio de façon à transmettre sur ladite ligne de réception un message synthétisé correspondant à la position dans laquelle se trouve la séquence de connexion d'un poste donné.

15. Système de communication selon les revendications 2, 8 et 11, caractérisé en ce que les première (f0), deuxième (f1) et troisième (f2) fréquences se trouvent en dehors des fréquences audibles.

16. Système selon l'une quelconque des revendications précédentes, caractérisé en ce que des détecteurs de consommation (50) sont connectés sur chaque poste du véhicule et en ce que la sortie de ces détecteurs est reliée aux moyens d'incrémentation (56) par l'intermédiaire d'interrupteurs statiques (55) correspondants commandés par lesdits moyens d'incrémentation (56).

17. Système de communication selon l'une quelconque des revendications précédentes, caractérisé en ce que lesdits moyens d'incrémentation sont reliés à des interrupteurs (71 à 75) de fixation de priorité.

18. Système de communication selon la revendication 13, caractérisé en ce qu'il comporte en outre des moyens d'affichage disposés à chaque poste, constitués d'un compteur-diviseur (27a) dont les sorties sont reliées à des diodes électroluminescentes (28 à 32) et dont l'entrée est reliée à travers un filtre de détection (22) dudit train d'impulsions, à ladite ligne de modulation.

19. Système de communication, selon la revendication 18, caractérisé en ce que ledit train d'impulsion est à une fréquence égale à ladite première fréquence (f0).

20. Système de communication selon l'une quelconque des revendications précédentes, caractérisé en ce que les moyens d'incrémentation desdites séquences de connexion sont constitués par un microprocesseur (56).

## Claims

1. A communication system usable in particular in an armoured vehicle, in which the various positions in the vehicle (OP1, OP2, OP3, OP4, HP, TEL.AR) are connected to a central box (1, 1a) comprising interconnection means for a permanent interphone communication between the various positions of the vehicle and means for selectively switching certain positions of the vehicle to radio transmitter/receiver devices (E/R1, E/R2, E/R3) connected to the central box in such a way as to permit communication between certain positions in the vehicle and the exterior, characterized in that the means for selectively switching the positions in the vehicle to the radio transmitter/receiver devices further comprise a device (55) for sequential scanning of the vehicle positions, means (62) of storing, for each position, a sequence of connection with the radio transmitter/receiver devices, means (56) for the incrementation of each of said connection sequences in response to a control signal generated by the operator from each position in the vehicle, and means (64) for the selective connection of said positions with said radio transmitter/receiver devices in accordance with the selected position of said connection sequences.

2. A communication system according to claim 1, in which each position comprises communication means (2, 7), characterized in that it further comprises a control box on which is disposed an incrementation control member (11) connected to an oscillator (13) of a first frequency (f0), the output of which is connected to a modulation line connecting the communication means (2) to the central box (1, 1a).

3. A communication system according to claim 1 or claim 2, characterized in that the device for sequential scanning of each position in the vehicle consists of static switches (55) each having a terminal connected to said corresponding modulation line issuing from the communication means (2) of said vehicle position, and in that the control terminals of said static switches (55) are connected to said incrementation means (56).

4. A communication system according to claim 3, characterized in that an input terminal of the incrementation means (56) is connected to a common output (L0) of said static switches (55) via a filter (57) for detecting said first frequency (f0) transmitted from each position in the vehicle.

5. A communication system according to any one of the preceding claims, characterized in that the means of storing said connection sequences consist of a reprogrammable memory (62) connected to said incrementation means (56).

6. A communication system according to any one of the preceding claims, characterized in that the selective connection means consist of a connecting matrix (64).

7. A communication system according to claim 6, characterized in that said connecting matrix (64) is connected through the intermediary of a data bus line to the incrementation means (56) and in that it is connected on the one hand to a modulation line of each vehicle position and on the other hand to the transmission and reception lines of the radio transmitter/receiver devices (E/R1, E/R2, E/R3).

8. A communication system according to any one of claims 2 to 7, characterized in that the control box disposed at each vehicle position also comprises a control member (15) for putting the radio transmitter/receiver devices into push-to-talk mode which is connected to an oscillator (17) of a second frequency (f1), the output of which is connected to the corresponding modulation line issuing from the communication means (2).

9. A communication system according to claims 4 and 8, characterized in that an input terminal of the incrementation means (56) is connected to said common output (L0) of said static switches (55) via a filter (58) for detecting said second frequency (f1) transmitted from each vehicle position.

10. A communication system according to claim 9, characterized in that ouput terminals of the incrementation means (56) are connected to devices (66 to 69) for putting the radio transmitter/receiver devices into push-to-talk mode so as to actuate said devices for putting into push-to-talk mode in response to the detection of said second frequency (f1).

11. A communication system according to any one of claims 2 to 10, characterized in that the box disposed at each position in the vehicle also comprises an identification control member (83) connected to an oscillator (85) of a third frequency (f2) the output of which is connected to the modulation line connecting the communication means (2) of said position to the central box (1a).

12. A communication system according to claims 4 and 11, characterized in that an input terminal of the incrementation means (56) is connected to the common output (L0) of said static switches (55) via a filter (86) for detecting said third frequency (f2) transmitted from each position in the vehicle.

13. A communication system according to claim 12, characterized in that an ouput terminal of the incrementation means (56) is connected to the modulation line of each position in the vehicle via a static switch (55) controlled by the incrementation means (56) so as to generate in said modulation line a pulse train for signalling to the position the position in which the connection sequence of said position is located.

14. A communication system according to any one the preceding claims, characterized in that it further comprises a speech synthesizer (80) comprising, stored in memory, synthesized messages corresponding to the various actions of the operators, in that the speech synthesizer is connected to the incrementation means (56) and to the means (62) of storing the sequences through the intermediary of a bus line and in that the synthesizer output (80) is connected to the reception line of the radio transmitter/receiver devices so as to transmit on said reception line a synthesized message corresponding to the position in which the connection sequence of a given position is located.

15. A communication system according to claims 2, 8 and 11, characterized in that the first (f0), second (f1) and third (f2) frequencies are located outside the audible frequency range.

16. A communication system according to any one of the preceding claims, characterized in that consumption detectors (50) are connected to each vehicle position and in that the outputs of these detectors are connected to the incrementation means (56) through the intermediary of corresponding static switches (55) controlled by said incrementation means (56).

17. A communication system according to any one of the preceding claims, characterized in that said incrementation means are connected to priority fixing switches (71 to 75).

18. A communication system according to claim 13, characterized in that it further comprises display means disposed at each position, consisting of a counter/divider (27a) whose outputs are connected to electroluminescent diodes (28 to 32) and whose input is connected, through the intermediary of a filter (22) for detecting said pulse train, to said modulation line.

19. A communication system according to claim 18, characterized in that said pulse train is at a frequency equal to said first frequency (f0).

20. A communication system according to any one of the preceding claims, characterized in that the incrementation means of said connection sequences consist of a microprocessor (56).

**Patentansprüche**

1. Kommunikationssystem, welches insbesondere in einem gepanzerten Fahrzeug brauchbar ist, in dem mehrere Bedienungsplätze (OP1, OP2, OP3, OP4, HP, TEL.AR) mit einem zentralen Schaltkasten (1 ; 1a) verbunden sind, der Verbindungseinrichtungen für eine ständige Wechselsprech-Kommunikation zwischen den verschiedenen Bedienungsplätzen des Fahrzeugs und Einrichtungen zum selektiven Verbinden gewisser Bedienungsplätze des Fahrzeugs mit Radio-(Funk-) Sende/Empfangseinrichtungen (E/R1, E/R2, E/R3) enthält, die mit dem zentralen Schaltkasten verbunden sind, derart, daß eine Kommunikation gewisser Bedienungsplätze des Fahrzeugs mit der Umgebung (dem Äußeren) gestattet wird, dadurch gekennzeichnet, daß die Einrichtungen zum selektiven Verbinden gewisser Bedienungsplätze des Fahrzeugs mit den Radio-Sende/Empfangseinrichtungen unter anderem umfassen eine Anordnung (55) zum sequentiellen Abfragen der Bedienungsplätze des Fahrzeugs, Speichereinrichtungen (62) um für jeden Bedienungsplatz eine Reihenfolge für dessen Verbindung mit den Radio-Sende/Empfangseinrichtungen zu speichern, Mittel (56) zum Fortschalten jeder der genannten Reihenfolgen für die Verbindung in Abhängigkeit von einem Befehlssignal, welches von dem Bedienungsmann ausgehend von jedem (beliebigen) Bedienungsplatz des Fahrzeugs erzeugt wurde, und Mittel (64) zum selektiven Verbinden der genannten Bedienungsplätze mit den genannten Radio-Sende/Empfangseinrichtungen in Abhängigkeit von der ausgewählten Position (dem ausgewählten Schritt) der genannten Reihenfolge für die Verbindung.

2. Kommunikationssystem nach Anspruch 1, bei dem jeder Bedienungsplatz Mittel (2, 7) zur Kommunikation aufweist, dadurch gekennzeichnet, daß er (der Bedienungsplatz) unter anderem einer Steuer-(Befehls-) Kasten aufweist, an dem ein Befehlsorgan (11) zum Fortschalten angebracht ist, welches mit einem Oszillator (13) einer ersten Frequenz (f0) verbunden ist, dessen Ausgang mit einer Modulationsleitung verbunden ist, welche die Mittel (2) zur Kommunikation mit dem zentralen Schaltkasten (1 ; 1a) verbindet.

3. Kommunikationssystem nach Anspruch 1 oder 2, dadurch gekennzeichnet, daß die Anordnung zum sequentiellen Abfragen jedes Bedienungsplatzes des Fahrzeugs durch statische Unterbrecher (55) gebildet ist, von denen ein Anschluß an die genannte Modulationsausgangsleitung der Mittel (2) zur Kommunikation des betreffenden Bedienungsplatzes des Fahrzeugs angeschossen ist, und daß der Befehlsanschluß der genannten statischen Unterbrecher (55) mit den Mitteln (56) zum Fortschalten verbunden ist.

4. Kommunikationssystem nach Anspruch 3, dadurch gekennzeichnet, daß ein Eingangsanschluß der Mittel (56) zum Fortschalten mit einem gemeinsamen Ausgang (L0) der genannten statischen Unterbrecher (55) über ein Filter (57) zum Erfassen der genannten ersten Frequenz (f0), die von jedem Bedienungplatz des Fahrzeugs ausgesandt wird, verbunden ist.

5. Kommunikationssystem nach irgendeinem der vorangehenden Ansprüche, dadurch gekennzeichnet, daß die Speichereinrichtungen für die genannten Reihenfolgen für die Verbindungen durch einen reprogrammierbaren Speicher (62) gebildet sind, der mit den Mitteln (56) zum Fortschalten verbunden ist.

6. Kommunikationssystem nach irgendeinem der vorangehenden Ansprüche, dadurch gekennzeichnet, daß die Mittel zum selektiven Verbinden durch eine Verbindungsmatrix (64) gebildet sind.

7. Kommunikationssystem nach Anspruch 6, dadurch gekennzeichnet, daß die Verbindungsmatrix (64) über eine Datensammelleitung mit den Mitteln (56) zum Fortschalten verbunden ist und daß sie einerseits mit der Modulationsleitung jedes Bedienungsplatzes des Fahrzeugs und andererseits mit den Sende- und den Empfangsleitungen der Radio-Sende/Empfangseinrichtungen (E/R1, E/R2, E/R3) verbunden ist.

8. Kommunikationssystem nach irgendeinem der Ansprüche 2 bis 7, dadurch gekennzeichnet, daß jeder der Steuer-(Befehls-)Kästen, die jeweils an jedem Bedienungsplatz des Fahrzeugs angeordnet sind, außerdem ein Befehlsorgan (15) zum Umschalten der Radio-Sende/Empfangseinrichtungen aufweist, welches an einen Oszillator (17) einer zweiten Frequenz (f1) angeschlossen ist, dessen Ausgang mit der entsprechenden Ausgangsmodulationsleitung der Mittel (2) zur Kommunikation verbunden ist.

9. Kommunikationssystem nach den Ansprüchen 4 und 8, dadurch gekennzeichnet, daß ein Eingangsanschluß der Mittel (56) zum Fortschalten mit dem genannten gemeinsamen Ausgang (L0) der genannten statischen Unterbrecher (55) über eine Filter (58) zum Erfassen der genannten zweiten Frequenz (f1), die von jedem Bedienungsplatz des Fahrzeugs ausgesandt wird, verbunden ist.

10. Kommunikationssystem nach Anspruch 9, dadurch gekennzeichnet, daß die Ausgangsanschlüsse der Einrichtungen (56) zum Fortschalten mit Einrichtungen (66 bis 69) zum Umschalten der Radio-Sende/Empfangseinrichtungen derart verbunden sind, daß sie an diese Einrichtungen in Abhängigkeit vom Erfassen der genannten zweiten Frequenz (f1) einen Umschaltbefehl liefern.

11. Kommunikationssystem nach irgendeinem der Ansprüche 2 bis 10, dadurch gekennzeichnet, daß der Kasten der an jedem Bedienungsplatz des Fahrzeugs vorgesehen ist, außerdem ein Identifikations-Befehlsorgan (83) aufweist, welches mit einem Oszillator (85) einer dritten Frequenz (f2) verbunden ist, dessen Ausgang mit einer Modulationsleitung verbunden ist, welche die Mittel (2) zur Kommunikation des genannten Bedienungsplatzes mit dem zentralen Schaltkasten (1a) verbindet.

12. Kommunikationssystem nach den Ansprüchen 4 und 11, dadurch gekennzeichnet, daß ein Eingangsanschluß der Mittel (56) zum Fortschalten mit einem gemeinsamen Ausgang (L0) der genannten statischen Unterbrecher (55) über ein Filter (86) zum Erfassen der genannten dritten Frequenz (f2), die von jedem Bedienungsplatz des Fahrzeugs ausgesandt wird, verbunden ist.

13. Kommunikationssystem nach Anspruch 12, dadurch gekennzeichnet, daß ein Ausgangsanschluß der Mittel (56) zum Fortschalten mit der Modulationsleitung jedes Bedienungsplatzes des Fahrzeugs über einen statischen Unterbrecher (55) verbunden ist, der von den Mitteln (56) zum Fortschalten derart gesteuert ist, daß er auf der genannten Modulationsleitung einen Impulszug erzeugt, um am Bedienungsplatz die Position (den Schritt) anzuzeigen, an der (an dem) sich die Reihenfolge der verbindungen für diesen Bedienungsplatz befindet.

14. Kommunikationssystem nach irgendeinem der vorausgehenden Ansprüchen, dadurch gekennzeichnet, daß es unter anderem einen Wortgenerator (80) aufweist, der einen Speicher für synthetische Nachrichten umfaßt, die verschiedenen Aktionen der Bedienungspersonen entsprechen, daß der Wortgenerator mit den Mitteln (56) zum Fortschalten und mit den Mitteln (62) zum Speichern der Reihenfolgen über eine Busleitung verbunden ist und daß der Ausgang des Wortgenerators (80) mit der Empfangsleitung der Radio-Sende/Empfangseinrichtungen derart verbunden ist, daß er über diese Empfangsleitung eine künstlich erzeugte Botschaft überträgt, welche der Position (der Stelle) entspricht, an der sich die Reihenfolge für die Verbindungen für einen gegebenen Bedienungsplatz befindet.

15. Kommunikationssystem nach den Ansprüchen 2, 8 und 11, dadurch gekennzeichnet, daß die erste Frequenz (f0), die zweite Frequenz (f1) und die dritte Frequenz (f2) im Frequenzband der Hörfrequenzen liegen.

16. System nach irgendeinem der vorangegangenen Ansprüche, dadurch gekennzeichnet, daß mit jedem Bedienungsplatz des Fahrzeugs Verbrauchsdetektoren (50) verbunden sind und daß der Ausgang dieser Detektoren mit den Mitteln (56) zum Fortschalten über diejenigen statischen Unterbrecher (55) verbunden ist, die von den Mitteln (56) zum Fortschalten entsprechend angesteuert wurden.

17. Kommunikationssystem nach irgendeinem der vorangegangenen Ansprüche, dadurch gekennzeichnet, daß die Mittel zum Fortschalten mit Unterbrechern (71 bis 75) zum Festlegen der Priorität verbunden sind.

18. Kommunikationssystem nach Anspruch 13, dadurch gekennzeichnet, daß es unter anderem Anzeigeeinrichtungen aufweist, die an jedem der Bedienungsplätze vorgesehen sind, und die durch einen Zähler-Teiler (27a) gebildet sind, dessen Ausgänge mit Elektrolumineszenzdioden (28 bis 32) verbunden sind und dessen Eingang über ein Detektionsfilter für den genannten Impulszug mit der genannten Modulationsleitung verbunden ist.

19. Kommunikationssystem nach Anspruch 18, dadurch gekennzeichnet, daß der genannte Impulszug eine Frequenz hat, die gleich der genannten ersten Frequenz (f0) ist.

20. Kommunikationssystem nach irgendeinem der vorangegangenen Ansprüche, dadurch gekennzeichnet, daß die Einrichtung zum Fortschalten der genannten Reihenfolgen für die Verbindungen durch einen Mikroprozessor (56) gebildet sind.

OP₁

OP₂

OP₃

OP₄

HP

tel
AR.

E/R₁

E/R₂

E/R₃

tel Ex.

FIG. 1

1

FIG. 2

2

EP 0 204 632 B1

FIG. 3

3

FIG. 4

H.P.

Tel. AR.

FIG.5

EP 0 204 632 B1

FIG. 6

FIG.7

FIG.8